## Europäisches Patentamt
## European Patent Office
## Office européen des brevets

(11) Numéro de publication: **0 025 744**
**B1**

(12) **FASCICULE DE BREVET EUROPEEN**

(45) Date de publication du fascicule du brevet: **16.05.84**

(51) Int. Cl.³: **B 60 G 13/00**, B 60 G 7/02, B 60 G 3/24

(21) Numéro de dépôt: **80401257.3**

(22) Date de dépôt: **03.09.80**

(54) Train avant de véhicule automobile.

(30) Priorité: **13.09.79 FR 7922854**

(43) Date de publication de la demande:
**25.03.81 Bulletin 81/12**

(45) Mention de la délivrance du brevet:
**16.05.84 Bulletin 84/20**

(84) Etats contractants désignés:
**DE FR GB IT**

(56) Documents cités:
**FR-A-1 473 342
FR-A-2 053 135
FR-A-2 299 982
FR-A-2 432 948
FR-E- 73 187
GB-A-1 499 696
GB-A-2 009 682
GB-A-2 026 404
NL-A-7 807 321
US-A-2 290 023
US-A-3 061 329**

(73) Titulaire: **AUTOMOBILES DANGEL Société dite:
5, Rue du Canal
F-68780 Sentheim (FR)**

(72) Inventeur: **Dangel, Henry Léon Albert
7, Rue du Sillon
F-68100 Mulhouse (FR)**

(74) Mandataire: **Moncheny, Michel et al
c/o Cabinet Lavoix 2 Place d'Estienne d'Orves
F-75441 Paris Cedex 09 (FR)**

Courier Press, Leamington Spa, England.

**Description**

La présente invention concerne un train avant à roues directrices pour véhicule automobile tout particulièrement adapté à la réalisation d'un train avant moteur pour véhicule à quatre roues motrices tels que les véhicules tout terrain.

Il est bien connu que la transformation d'un véhicule classique à traction arrière et roues avant directrices en véhicule tout terrain, c'est-à-dire en véhicule à quatre roues motrices, nécessite pratiquement le changement complet du train avant, ce qui est comliqué et coûteux pour le constructeur ou pour celui qui désire effectuer la transformation.

On sait également que les suspensions, dans lesquelles l'ensemble amortisseur-ressort de suspension est solidaire d'un porte-moyeu articulé sur un triangle de suspension, telles que les suspensions télescopiques intégrées décrites notamment dans le brevet FR—A—994 600, offrent l'inconvénient d'exercer des efforts de flexion importants sur la tige d'amortisseur, avec un risque d'endommagement au niveau du palier de guidage de cette tige par rapport au corps de l'amortisseur.

Par contre, dans les suspensions (FR—A—2 299 982) comprenant deux triangles, inférieur et supérieur, et un ensemble amortisseur-ressort de suspension articulé sur le bras supérieur, tout l'effort est reporté sur les triangles, et les liaisons entre ces triangles et, d'une part le porte-moyeu, et d'autre part la structure du véhicule, sont très fortement sollicitées.

La présente invention a pour but de remédier à ces inconvénients en réalisant un train avant moteur qui puisse s'adapter facilement sur les véhicules de type classique et ne présente pas les défauts inhérents aux agencements décrits ci-dessus.

A cet effet elle a pour objet un train avant comportant pour chaque roue un ensemble amortisseur télescopique-ressort de suspension fixé rigidement à un porte-moyeu et relié par articulation à rotule à un bras de suspension, caractérisé en ce que le porte-moyeu est relié par une deuxième articulation à rotule à un deuxième bras de suspension articulé à son extrémité opposée sur un berceau fixé sous le châssis du véhicule, les centres des deux articulations à rotule étant alignés sur l'axe de pivotement de l'ensemble amortisseur-ressort de suspension, et que le moyeu est relié, d'une manière connue en soi, à un différentiel central par une transmission transversale qui s'étend entre les bras de suspension, le train étant ainsi rendu moteur.

La description ci-dessous d'un mode de réalisation donné à titre d'exemple non limitatif et représenté aux dessins annexés fera ressortir les avantages et caractéristiques de l'invention. Sur ces dessins:

— la Fig. 1 est une vue partie un coupe, partie en vue extérieure d'un demi-train avant moteur selon l'invention, seule la partie inférieure du corps d'amortisseur ou pivot de fusée étant toutefois visible sur cette Figure;
— la Fig. 2 est une vue schématique extérieure de la partie latérale du train avant de la Fig. 2 montrant la suspension de roue;
— la Fig. 3 est une vue en perspective du portemoyeu solidaire de la partie inférieure du corps d'amortisseur;
— la Fig. 4 est une vue en plan de dessus du triangle de suspension inférieur et de son berceau de fixation sur la carrosserie du véhicule.

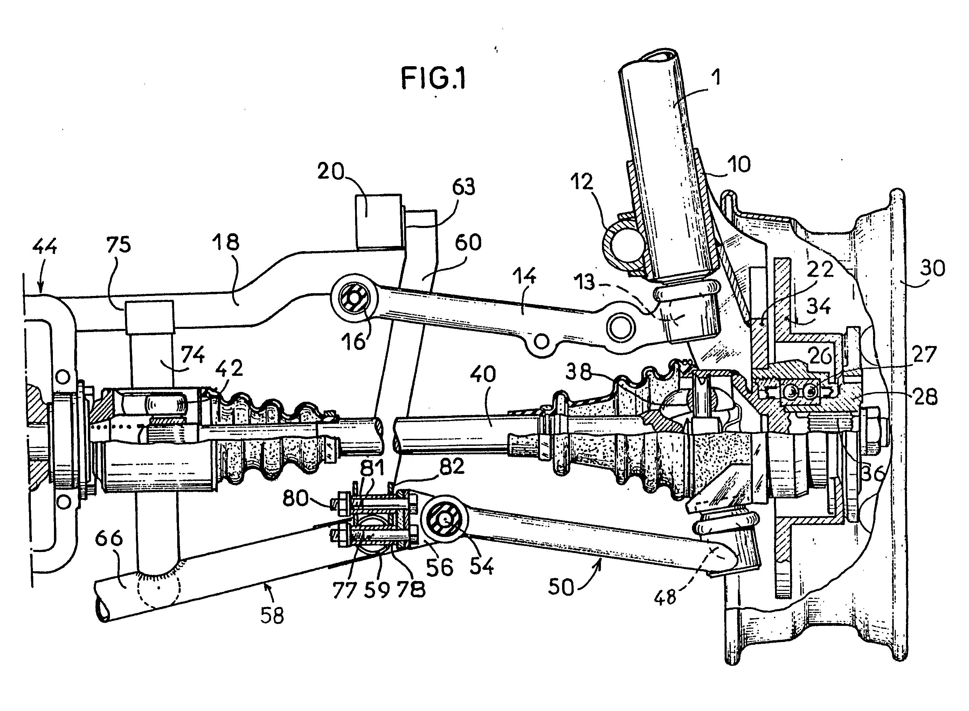

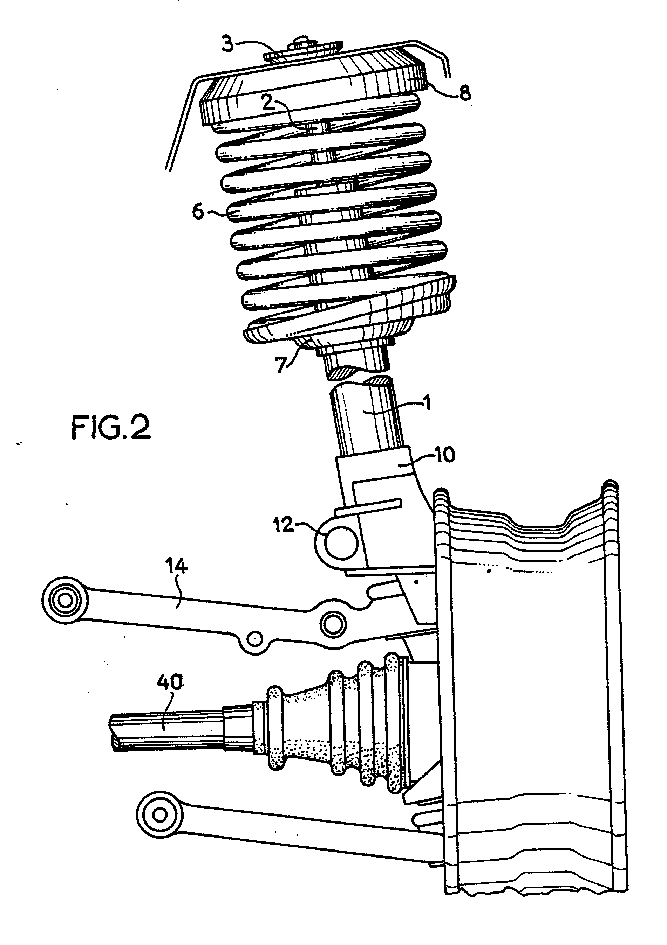

Comme le montrent plus particulièrement les Fig. 1 et 2, le train avant de l'invention est du type à amortisseur télescopique intégré et comporte un amortisseur télescopique 1 dont la tige 2 est fixée en un point 3 de la carrosserie 4 du véhicule par l'intermédiaire d'un support supérieur de l'élément de suspension. Un ressort de suspension 6 est monté autour de l'amortisseur 1 entre une coupelle supérieure 8 fixée sur le support de l'élément de suspension et une coupelle inférieure 7 solidaire du corps de l'amortisseur 1.

A sa partie inférieure le corps de l'amortisseur 1 est fixé dans un manchon 10 qui porte un fourreau cylindrique 12 de fixation d'un levier de direction (non représenté sur le dessin) qui est sensiblement perpendiculaire au manchon 10. A l'extérieur du manchon 10 le corps de l'amortisseur 1 porte une rotule d'articulation d'un bras ou triangle de suspension 14 dont chacune des branches est fixée à son extrémité, par l'intermédiaire d'un silent bloc 16, sur une traverse 18 reliant les deux longerons 20 de la carrosserie du véhicule.

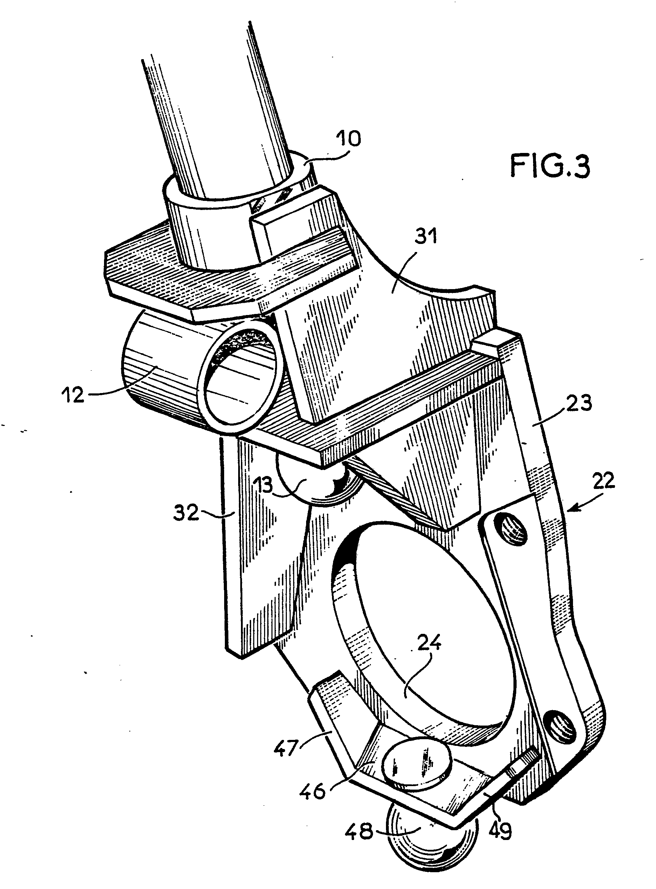

Le manchone 10 de support du corps d'amortisseur 1 est également solidaire d'un porte-moyeu désigné dans son ensemble par la référence 22 et représenté plus particulièrement sur la Fig. 3. Ce porte-moyeu comporte un flasque plat 23 percé d'un orifice circulaire 24 dans lequel est fixée une fusée 26 montée autour du moyeu 28 de la roue 30 par l'intermédiaire d'un roulement à billes 27. Le flasque 23 est relié au manchon 10 par deux ailes latérales respectivement 31 et 32 fixées en deux points diamétralement opposés de la surface extérieure du manchon 10 et se prolongeant latéralement et vers le bas par rapport à ce manchon musqu'en dessous de la rotule 13 d'articulation du triangle de suspension 14. L'axe de la fusée 26 est décalé vers l'avant par rapport à celui du corps de l'amortisseur 1.

Un disque de frein 34 est bien entendu monté dans la roue 30 autour du moyeu 28. Par ailleurs, ce moyeu 28 est cannelé intérieurement et rendu solidaire en rotation d'un tronçon d'arbre cannelé extérieurement 36. Le tronçon d'arbre 36 est relié par un joint universel 38 à un arbre de transmission transversal 40 relié par un joint tripode homocinétique à coulissement interne 42 à un ensemble de différentiel 44 relié par une transmission longitudinale (non représentée) au moteur du véhicule.

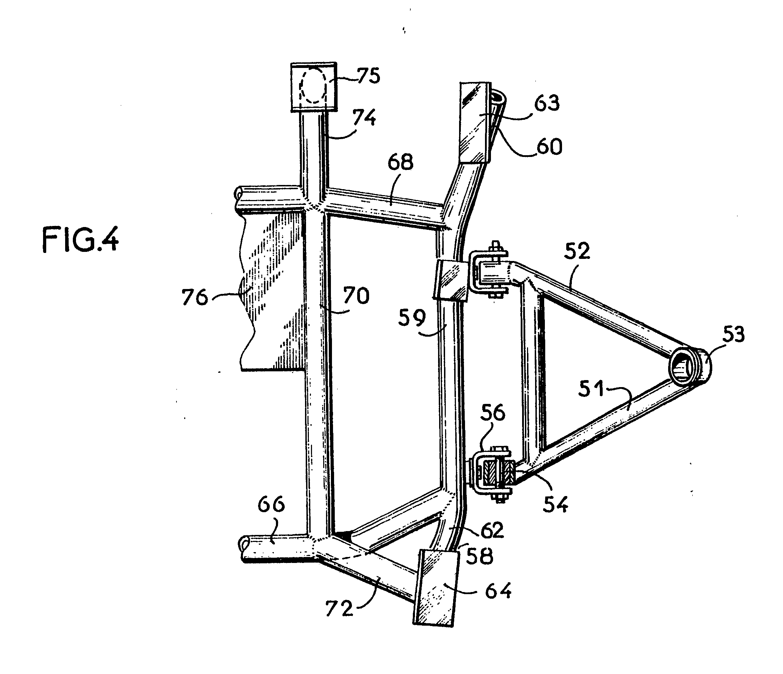

Le flasque 23 est solidaire à sa partie inférieure en dessous de l'ouverture circulaire 24 d'une plaquette 46 qui lui est perpendiculaire et est, de préférence, munie de deux ailes latérales divergentes respectivement 47 et 49. La plaquette 46 porte une rotule 48 d'articulation du triangle inférieur de suspension 50. La rotule 48 est centrée sur l'axe longitudinal de l'amortisseur 1 qui passe également par le centre de la rotule 13 d'articulation du bras supérieur de suspension 14. Ainsi les deux ailes 47 et 49 se trouvent-elles de part et d'autre du joint universel 38 et protègent ce joint. Par ailleurs le triangle inférieur 50 comporte deux bras 51 et 52 qui partent d'un boîtier de rotule 53 et qui sont montés pivotants à leur extrémité opposée à ce boîtier sur un axe 54 porté par une chape 56 ancrée dans un berceau 58 de fixation sur le châssis principal du véhicule (Fig. 4).

Le berceau 58 comporte un tube rectiligne 59 dont les deux extrémités sont recourbées vers le haut et forment deux bras inclinés respectivement 60 et 62 fixés à leur extrémité sur le longeron 20. Chacun des bras 60 et 62 comporte en effet un gousset de fixation respectivement 63 et 64, les deux goussets étant dirigés en sens inverse et appuyant par suite sur des faces opposées du longeron 20. Les deux tubes longitudinaux 59 des deux demi-trains sont reliés entre eux par deux tubes transversaux respectivement 66 et 68. Un tube entretoise 70 parallèle au tube 59 renforce toutefois le berceau entre les tubes 66 et 68 et est prolongé d'un côté par un tube incliné 72 de liaison au gousset 64 du bras 62 et, de l'autre, par un tube 74 terminé par une gouttière en U 75 de fixation sur une traverse avant du châssis. Une plaque de fond 76 est de préférence montée entre les tubes transversaux 66 et 68 et les tubes entretoisa 70 des deux demi-trains avant de façon à protéger l'ensemble du train et surtout de la transmission des cailloux, de la boue, ou autres éléments provenant du sol.

Chacune des chapes 56 est fixée sur le tube 59 au moyen d'un boulon 77 traversant un manchon 78 monté diamétralement dans le tube 59. Cette fixation est renforcée par un second boulon 80 placé dans un manchon 81 traversant diamétralement un tube 82 d'axe sensiblement vertical. Le tube 82 peut être limité à un tronçon de tube destiné à assurer le renforcement de la fixation de la chape 56 comme le montre la Fig. 1 ou être prolongé vers le haut jusqu'au longeron 20 auquel il est relié par un gousset analogue aux goussets 63 et 64. Ce troisième gousset de même que le tube qui le porte et le longeron 20 n'ont pas été représentés sur la Fig. 4 pour ne pas comliquer cette Figure.

L'ensemble du berceau 58 peut ainsi être fixé sur le longeron 20 et sur la traverse avant du châssis sans déplacement ni modification de ces organes. Par suite, l'installation du bras inférieur de suspension 50 n'exige pas de démontage ni de modification de la suspension classique.

Il est à noter que la présence de deux triangles de suspension, utilisés avec un amortisseur solidaire du porte-moyeu, était à priori à exclure, car le centre de la rotule inférieure 48 ne décrit pas un arc de cercle, lors du débattement vertical de la roue 30, alors que la rotule 13 solidaire du corps de l'amortisseur 1 se déplace selon un arc de cercle autour de l'axe d'articulation du bras 14 sur la traverse 18. Or il s'avère de manière surprenante qu'à l'intérieur de débattement utile le centre de cette rotule 48 décrit une courbe complexe suffisamment voisine d'un arc de cercle, pour que les différences puissent être absorbées au niveau des articulations élastiques du triangle inférieur sur le berceau. Il a été constaté que cette disposition soulage efficacement les organes de suspension à la fois dans le sens longitudinal et dans le sens transversal, tout en conservant les possibilités de débattement vertical et de pivotement de la roue 30.

L'intérêt d'un tel montage à double triangle sur un train avant Mc Pherson classique lorsque celui-ci est transformé en train moteur est grand car:

1°) les efforts de flexion supportés par la tige d'amortisseur sont pratiquement éliminés;

2°) les efforts latéraux imprimés aux rotules de pivot transmis par les triangles aux points d'ancrage côtés châssis sont mieux répartis;

3°) sur le plan de la sécurité, en cas de bris d'un triangle de suspension ou de rotule supérieur ou inférieur, la roue reste parfiatement maintenue et conserve l'intégralité de ses fonctions.

On dispose ainsi d'un train avant moteur qui peut facilement être monté sur un véhicule ayant un train avant de type classique de sorte que le constructeur peut utilise les mêmes organes de suspension pour réaliser des véhicules à roues arrière motrices et des véhicules à quatre roues motrices. La disposition particulière de ce train avant permet de l'utiliser comme train avant d'origine et de le monter directement sur le véhicule lors de sa construction, ou de l'utiliser lors de la transformation d'un véhicule à deux roues motrices en véhicule à quatre roues motrices.

**Revendications**

1. Train avant pour véhicule automobile, comportant pour chaque roue (30) un ensemble amortisseur télescopique ressort de suspension (1) fixe rigidement à un porte-moyeu (22) et relié par une articulation à rotule (13) à un bras de suspension (14) articulé sur le châssis du véhicule, caractérisé en ce que le porte-

moyeu est relié par une deuxième articulation à rotule (48) à un deuxième bras de suspension (50) articulé à son extrémité opposée sur un berceau (58) fixé sous le châssis du véhicule, les centres des deux articulations à rotule (13, 48) étant alignés sur l'axe de pivotement de l'ensemble amortisseur-ressort de suspension (1), et que le moyeu (28) de la roue (30) est relié, d'une manière connue en soi, à un différentiel central (44) par une transmission transversale (40) qui s'étend entre les bras de suspension (14, 50), le train étant ainsi rendu moteur.

2. Train suivant la revendication 1, caractérisé en ce que le porte-moyeu (22) comporte un manchon cylindrique (10) de fixation sur le corps de l'amortisseur, ce manchon étant muni de deux ailes latérales (31, 32) dirigées vers le bas et fixées sur un flasque de support (23) d'une fusée tubulaire (26).

3. Train suivant la revendication 2, caractérisé en ce que le porte-moyeu (22) porte à sa partie inférieure, en dessous de la fusée tubulaire (26) et sur sa face opposée une plaquette (46) porte-rotule.

4. Train suivant la revendication 3, caractérisé en ce que le berceau (58) comporte deux tubes (59) recourbés à leurs extrémités et fixés chacun par ces deux extrémités (60, 62) sur un longeron.

5. Train suivant la revendication 4, caractérisé en ce que le berceau comporte un second tube longitudinal (70) parallèle au tube recourbé (59) et fixé à l'une de ses extrémités sur une traverse de fixation sur la carrosserie.

6. Train suivant l'une des revendications 4 et 5, caractérisé en ce que le berceau (58) comporte une plaque (76) de protection en dessous de la transmission transversale.

## Patentansprüche

1. Vorderradantrieb für ein Kraftfahrzeug, mit FederbeinRadaufhängung (1) für jedes Rad (30), welche starr an einer Nabenaufnahme (22) befestigt und über ein Kugelgelenk (13) mit einem Aufhängungsarm (14) verbunden ist, der an de Fahrzeugrahmen angelenkt ist, dadurch gekennzeichnet, daß die Nabenaufnahme über ein zweites Kugelgelenk (48) mit einem zweiten Aufhängungsarm (50) verbunden ist, welcher an seinem gegenüberliegenden Ende an einem unter dem Fahrzeugrahmen befestigten Träger (58) angelenkt ist, wobei die Mittelpunkte der beiden Kugelgelenke (13, 48) auf der Drehachse der Federbein-Radaufhängung (1) liegen, und daß die Nabe (28) des Rades (30) in an sich bekannter Weise zum Antrieb über eine sich zwischen den Aufhängungsarmen (14, 50) erstreckende Übertragungswelle (40) mit einem mittig angeordneten Differential (44) verbunden ist.

2. Antrieb nach Anspruch 1, dadurch gekennzeichnet, daß die Nabenaufnahme (22) eine zylindrische Hülse (10) für die Befestigung an dem Stoßdämpferkörper der Radaufhängung (1) aufweist, wobei diese Hülse mit zwei nach unten gerichteten seitlichen Flügeln (31, 32) versehen ist, die an einem Tragflansch (23) einer zylindrischen Achse (26) befestigt sind.

3. Antrieb nach Anspruch 2, dadurch gekennzeichnet, daß die Nabenaufnahme (22) an ihrem unteren Teil unterhalb der zylindrischen Achse (26) und an ihrer gegenüberliegenden Seite eine Lagerstelle (46) für das Kugelgelenk (48) aufweist.

4. Antrieb nach den Ansprüchen 1 und 3, dadurch gekennzeichnet, daß der Träger (58) zwei an seinen Enden gekrümmte Rohre (59) aufweist, die jeweils über diese Enden (60, 62) mit einem Längsstück verbunden sind.

5. Antrieb nach Anspruch 4, dadurch gekennzeichnet, daß der Träger (58) ein zweites Längsrohr (70) aufweist, welches sich parallel zu dem gekrümmten Rohr (59) erstreckt und über sein eines Ende mit einer Traverse für die Befestigung an dem Fahrzeugrahmen befestigt ist.

6. Antrieb nach einem der Ansprüche 4 und 5, dadurch gekennzeichnet, daß der Träger (58) unterhalb der Übertragungswelle eine Schutzplatte (76) aufweist.

## Claims

1. A front set of wheels for a motor vehicle, comprising for each wheel (30) a telescopic shock absorber-suspension spring assembly (1) rigidly fixed to a hub support (22) and connected by a ball joint articulation (13) to a suspension arm (14) pivotally connected to the chassis of the vehicle, characterized in that the hub support is connected by a second ball joint articulation (48) to a second suspension arm (50) pivotally connected at its opposite end to a cradle (58) fixed under the chassis of the vehicle, the centres of the two ball joint articulations (13, 48) being in alignment on the pivot axis of the shock absorber-suspension spring assembly (1), and the hub (28) of the wheel (30) is connected, in a manner known *per se*, to a central differential (44) by a transverse transmission (40) which extends between the suspension arms (14, 15), the set of wheels being thus rendered driving wheels.

2. A set of wheels according to claim 1, characterized in that the hub support (22) includes a cylindrical sleeve (10) for fixing to the body of the shock absorber, this sleeve being provided with two lateral wings (31, 32) which extend downwardly and are fixed to a support wall (23) of a tubular stub-axle (26).

3. A set of wheels according to claim 2, characterized in that the hub support (22) carries in its lower part, below the tubular stub-axle (26) and on its opposite side, a ball joint-carrying plate (46).

4. A set of wheels according to claim 3, characterized in that the cradle (58) has two tubes (59) which are bent at their ends and are each fixed by these two ends (60, 62) to a side-member.

5. A set of wheels according to claim 4, characterized in that the cradle has a second longitudinal tube (70) which is parallel to the bent tube (59) and fixed at one of its ends to a cross-member for fixing to the body.

6. A set of wheels according to one of the claims 4 and 5, characterized in that the cradle (58) has a protection plate (76) below the transverse transmission.

FIG.1

FIG.2

FIG.3

FIG.4